# FASCICULE DE BREVET EUROPEEN

(11) **EP 1 719 659 B1**
(45) Date de publication et mention de la délivrance du brevet: **25.09.2013**
(21) Numéro de dépôt: 06300225.7
(22) Date de dépôt: 13.03.2006
(51) Int. Cl.: B60N 2/04, B60N 2/02

(54) **Siège repliable en au moins une position pour véhicule automobile**
Kraftfahrzeugsitz, klappbar in zumindest eine Position
Seat, folding to at least one position, for automotive vehicle

(30) Priorité: 27.04.2005 FR 0551082
(43) Date de publication de la demande: 08.11.2006
(73) Titulaire: Peugeot Citroën Automobiles SA, 78140 Vélizy-Villacoublay (FR)
(72) Inventeur: Jegou, Claude, 95100 Argenteuil (FR)
(74) Mandataire: Fernandez, Francis Lionel

(56) Documents cités:
- EP-A1- 1 488 951
- WO-A-97/43141
- WO-A1-2005/012030
- CH-A- 350 553
- US-A1- 2004 212 237
- US-A1- 2004 245 829

## Description

La présente invention concerne un siège repliable pour un véhicule automobile, notamment du type monospace.

Les véhicules automobiles du type familial ou monospace ou encore les cabines des camions sont souvent équipés de sièges repliables, et éventuellement extractibles, de façon à aménager l'espace intérieur du véhicule en fonction du nombre de passagers à bord et de l'encombrement des bagages à transporter.

Des sièges de ce type ont déjà été proposés. Ils comportent principalement un châssis, un dossier fixé au châssis et un coussin d'assise supporté par le châssis. Ce châssis est monté sur des rails longitudinaux ce qui permet de déplacer le siège vers l'avant ou l'arrière du véhicule. La solution la plus courante consiste à rabattre le dossier sur le coussin d'assise, ce dernier restant immobile par rapport au châssis. L'inconvénient de cette solution est que le gain de place n'est pas optimisé puisque l'encombrement du coussin d'assise subsiste.

Divers mécanismes ont alors été proposés pour les sièges arrières pour replier le coussin d'assise en position verticale, le coussin se rabattant contre le dossier, et à déplacer le siège vers l'avant du véhicule, contre les dossiers des sièges avants, de façon à libérer un maximum de place pour les bagages.

A titre d'exemple, le brevet US 5,158,338 décrit un siège de ce type, comportant un mécanisme de sécurité verrouillant le déplacement longitudinal du siège lorsque le coussin est replié ou déployé et inversement verrouillant le basculement du coussin lorsque le siège est déplacé longitudinalement.

Comme autre exemple, le brevet US 6,655,738 décrit également un siège repliable permettant de gagner un maximum de place pour les bagages, lorsque le siège est en position replié. Selon ce brevet, le dossier se rapproche du coussin en même temps que celui-ci est replié en position verticale, le siège replié ayant alors un faible encombrement.

Le document US2004/02112337 décrit un siège rabattable conforme au préambule de la revendication 1.

Un tel siège ne présente pas les avantages de compacité ni de modularité d'un siège tel que celui proposé par la présente invention.

Selon la présente invention, tous les éléments participant à la cinématique du siège, dans ses deux positions de repliement, font partie intrinsèque du siège qui peut être retiré et ou interchangé sans outillage particulier.

Le siège devient complètement amovible par son extraction des rails ou glissières fixées au plancher du véhicule sans nécessiter pour cela d'opération de raccordement sur le plancher du véhicule, d'un ou plusieurs éléments participant à la cinématique du siège.

La présente invention propose un siège repliable pouvant prendre au moins une position repliée. Dans une première position, le dossier est affaissé sur le coussin d'assise et ce dernier est rapproché du plancher du véhicule de façon à notoirement diminuer l'encombrement du siège replié. Selon un mode de réalisation avantageux, le siège peut alternativement être replié dans une deuxième position pour laquelle le coussin d'assise et son support sont verticaux, à proximité immédiate du dossier ou en contact avec le dossier. L'utilisateur du véhicule peut ainsi choisir la position repliée du siège la mieux adaptée au but recherché, dégager un maximum de place pour le transport des bagages ou améliorer le confort des passagers en escamotant par exemple le siège central d'une rangée de trois sièges. Dans ce dernier cas, le siège replié peut servir de tablette. De plus, le repliement du siège est aisé et peut être effectué par un passager occupant un siège adjacent. La manoeuvre est particulièrement intéressante lorsque le véhicule possède trois sièges de front, le siège central pouvant être aisément replié par le passager occupant un siège voisin sans avoir à sortir du véhicule. De l'espace est ainsi libéré ce qui améliore le confort du véhicule.

De façon plus précise, l'invention concerne un siège repliable pour voiture automobile conforme à l'objet de la revendication 1.

Le bâti peut comporter avantageusement des patins à son extrémité inférieure lesquels coulissent sur des rails longitudinaux fixés au plancher, ce qui permet le déplacement longitudinal du siège.

Selon un autre mode de réalisation, le siège peut comporter des moyens de déplacement latéraux permettant de déplacer latéralement au moins une partie du siège. Selon une variante de réalisation, le siège comporte des rails transversaux sensiblement perpendiculaires à l'axe longitudinal du véhicule, le bâti se déplaçant latéralement sur les rails transversaux. Selon une autre variante de réalisation, le dossier et la structure d'assise sont montés coulissant latéralement à l'intérieur du bâti.

Selon un autre mode de réalisation, le dossier comporte des moyens lui permettant de passer de ladite position déployée à une autre position repliée selon laquelle la structure d'assise pivote vers le haut, la structure d'assise passant d'une position sensiblement horizontale à une position sensiblement verticale, le coussin d'assise venant à proximité immédiate du dossier. Les moyens permettant de passer de la position déployée à cette autre position repliée peuvent être constitués d'un mécanisme de verrouillage débrayable du support frontal dont une partie est solidaire de la partie avant du bâti et dont l'autre partie est solidaire dudit support frontal.

Lesdits moyens comportent avantageusement une bielle de liaison ayant une extrémité frontale et une extrémité arrière, l'extrémité frontale étant montée pivotante autour d'un axe horizontal du support frontal et ladite extrémité arrière étant montée pivotante autour d'un axe horizontal solidaire du bâti.

L'axe horizontal autour duquel pivote l'extrémité arrière de ladite bielle peut avantageusement être l'axe d'inclinaison du dossier.

Le siège peut avantageusement être équipé de moyens élastiques de rappel amenant automatiquement la structure d'assise de la position déployée à la deuxième position repliée lorsque ledit mécanisme de verrouillage est débrayé.

D'autres caractéristiques et avantages de l'invention ressortiront de la description suivante, donnée uniquement à titre d'exemple et faite en référence aux dessins annexés sur lesquels :
- la figure 1 représente une vue de profil d'un premier mode de réalisation, sans les coussins d'assise et de dossier,
- la figure 2 montre en perspective ce premier mode de réalisation, vue de dessous et de coté,
- les figures 3 et 4 illustrent de façon schématique les diverses articulations du premier mode de réalisation vu respectivement de profil et de face,
- la figure 5 représente une vue de profil d'un deuxième mode de réalisation, sans les coussins d'assise et de dossier,
- la figure 6 illustre de façon schématique les diverses articulations du deuxième mode de réalisation vu de profil,
- les figures 7 et 8 montrent schématiquement un mode de réalisation du support frontal et du mécanisme de verrouillage débrayable,
- les figures 9 A-D illustre le repliement du siège selon une première position repliée,
- les figures 10 A-D illustrent le repliement du siége selon une deuxième position repliée, et
- les figures 11 A et B montrent schématiquement une partie d'un mode de réalisation selon lequel le dossier et la structure d'assise peuvent être déplacés latéralement à l'intérieur du bâti, lequel est fixe.

Dans la description qui suit, le mot "avant" ou "arrière" appliqué à un élément du siège indique qu'il est situé respectivement à l'avant ou à l'arrière du siège par rapport à l'avant ou à l'arrière du véhicule. De même, le mot "latéral" indique une position ou un déplacement sensiblement perpendiculaire à l'axe longitudinal du véhicule.

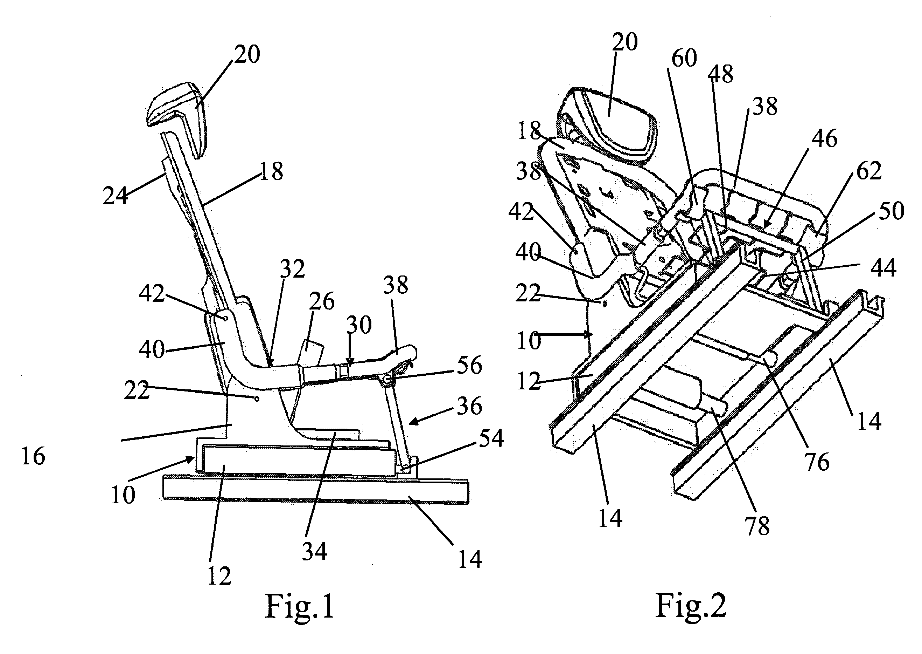

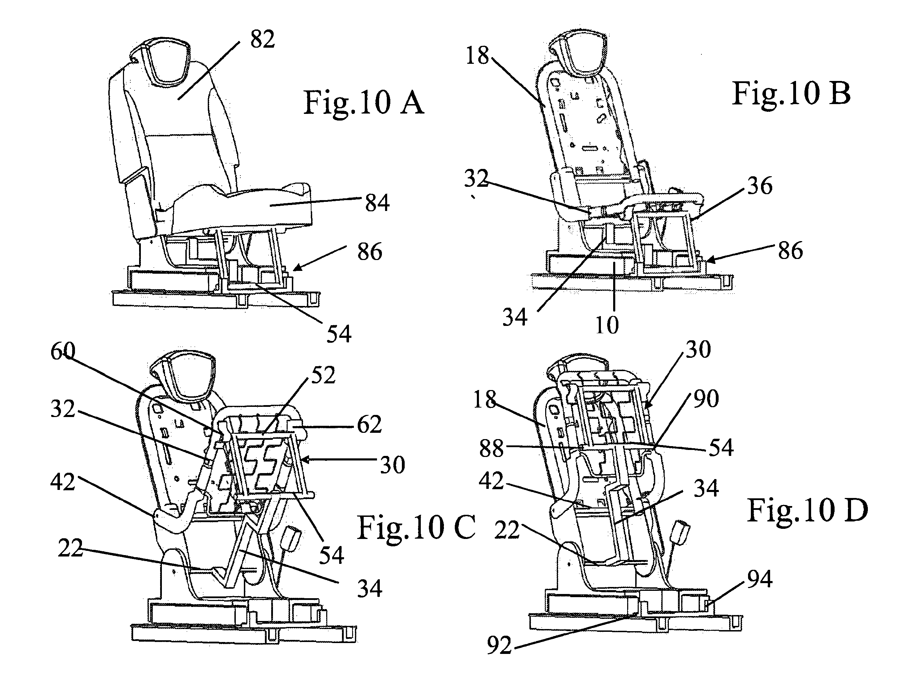

Sur la figure 1, le siège est représenté de profil sans ses garnitures, c'est-à-dire sans le coussin de dossier et sans le coussin d'assise. Le siège comporte un bâti 10 muni de deux patins longitudinaux et parallèles 12 glissant sur deux rails parallèles longitudinaux 14 fixés au plancher du véhicule. Le bâti est solidaire des rails 14 et peut coulisser pour être déplacé longitudinalement d'avant en arrière et d'arrière en avant. Le bâti comporte un soubassement 16. Le dossier du siège est constitué d'une armature tubulaire 18 supportant un coussin (représenté sur la figure 10A) et d'un appui-tête 20 fixé au sommet de l'armature tubulaire 18. Cette dernière est montée pivotante autour d'un axe horizontal 22 fixé au bâti 10. L'arrière du dossier est habillé d'une tôle de fond 24. Une attache de ceinture de sécurité 26 est fixée au bâti 10.

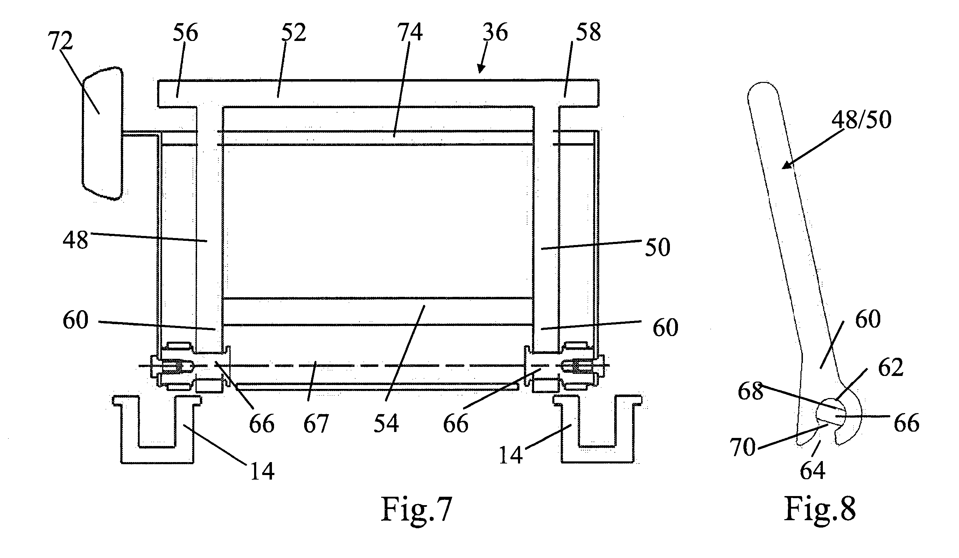

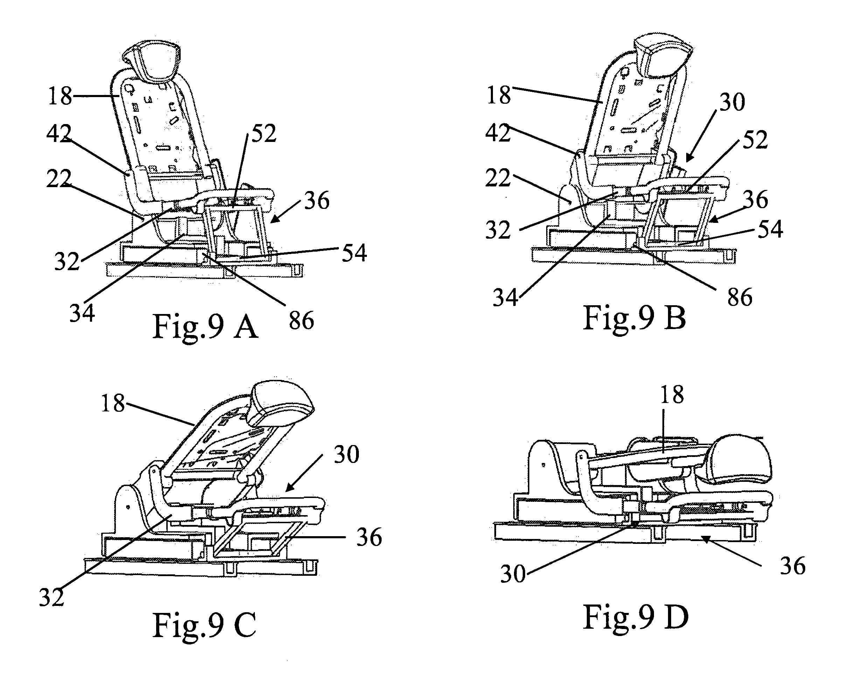

Le siège comporte également une structure d'assise 30 montée pivotante sur le bâti 10 entre une position déployée (figures 1, 2, 9A et 10A) permettant à un passager de s'asseoir et au moins une position repliée (figures 9D et 10D). La structure d'assise 30 comprend une armature d'assise 32, un élément de liaison 34 et un support frontal 36. L'armature d'assise 32 comporte une partie 38, sensiblement rectangulaire et approximativement horizontale en position déployée, prolongée vers l'arrière par deux bras 40 fixés autour d'un axe horizontal 42 du dossier 18. Cet axe 42 est situé au-dessus de l'axe 22. La partie rectangulaire 38 est munie de ressorts 44 (figure 2) destinés à supporter un coussin d'assise. L'élément de liaison 34, ou bielle de liaison, se compose d'une barre longitudinale dont l'extrémité arrière est fixée en rotation autour de l'axe horizontale 22 et dont l'extrémité avant est montée en rotation autour d'un axe horizontal du support frontal 36. Le support frontal 36 est constitué principalement d'un cadre tubulaire 46 dont un mode de réalisation est représenté sur la figure 7.

Sur cette figure 7, le support frontal 36 comporte deux cotés latéraux 48 et 50 et deux cotés horizontaux, l'un supérieur 52 et l'autre inférieur 54. Les extrémités 56 et 58 du coté horizontal supérieur 52 sont disposées en rotation dans des logements respectivement 60 et 62 (figure 2) fixés sous la partie avant de l'armature d'assise 32, ce qui autorise la rotation du support frontal 36 autour de l'axe formé par le coté supérieur 52 et ses extrémités 56-58. L'extrémité avant de l'élément ou bielle de liaison 34 est montée pivotante autour et au milieu du coté horizontal inférieur 54 (bien visible sur les figures 10C et D). Ce coté horizontal inférieur forme donc un axe de rotation pour la bielle de liaison 34. Les extrémités inférieures des cotés latéraux 48 et 50 se terminent chacune par un pied 60 dont la forme est illustrée sur la figure 8. Le pied comporte une cavité 62 de forme cylindrique et ouverte vers le bas par un passage 64. Un élément de verrouillage 66, solidaire du bâti 10, rotatif autour d'un axe horizontal 67 et comportant deux méplats 68 et 70, coopère avec la cavité 62 pour former un mécanisme de verrouillage débrayable du support frontal 36. La rotation de l'élément de verrouillage 66 autour de l'axe 67 est commandée à l'aide d'une manette qui prend la forme d'un bouton de commande 72 sur la figure 7. Lorsque le siège est en position déployée, l'élément 66 est orienté dans la cavité de sorte qu'il ne puisse pas passer à travers le passage 64 (comme illustré sur la figure 8) et donc emprisonné dans la cavité. L'élément 66 est maintenu dans une telle position par un ressort de rappel (non représenté). Lorsque les deux méplats 68 et 70 sont amenés en position sensiblement verticale, en tournant le bouton 72, l'élément 66 peut passer à travers le passage 64 et libérer ainsi le support frontal 36 du bâti 10. Le support frontal 36 est symétrique par rapport à un plan médian vertical. On a ainsi un mécanisme de verrouillage pour chacun des deux pieds 60 et deux boutons de commande 72. Une tringle 74 relie ces deux boutons de sorte que les deux mécanismes de verrouillage peuvent être commandés simultanément par la rotation de l'un ou l'autre de ces boutons. Lorsque l'élément 66 est positionné pour pouvoir passer à travers le passage 64, des moyens élastiques de rappel (non représenté) basculent automatiquement la structure d'assise vers le haut pour l'amener et la maintenir en position repliée. Ces moyens peuvent par exemple être constitués de deux ressorts de type spiral, chacun étant positionné autour de l'axe 42, une extrémité du ressort étant fixe (solidaire du bâti) et l'autre extrémité étant solidaire du bras 40.

Selon un mode réalisation du support frontal, schématisé sur les figures 9 et 10, le coté horizontal inférieur 54 est confondu avec l'axe 67. Dans ce cas, l'articulation du support frontal 36 au bâti 10 et l'articulation de la bielle de liaison 34 au support frontal 36 se font autour du même axe 54. Par soucis de clarté, ce mode de réalisation est représenté sur les figures autres que les figures 7 et 8, l'axe 67 et le coté horizontal inférieur 54 du support frontal 36 étant confondus.

Bien visible sur la figure 2, deux coulisseaux parallèles et transversaux 76 et 78 sont intercalés entre le bâti 10 et les patins 12 de façon à permettre un déplacement latéral du siège. Le bâti 10 est supporté par les coulisseaux lesquels sont supportés par les patins 12. Le siège peut ainsi être déplacé selon une direction transversale perpendiculaire à l'axe longitudinal du véhicule et selon une direction longitudinale parallèle à cet axe longitudinal. Des moyens de blocage et de déblocage de la position latérale du siège sont prévus (non représentés).

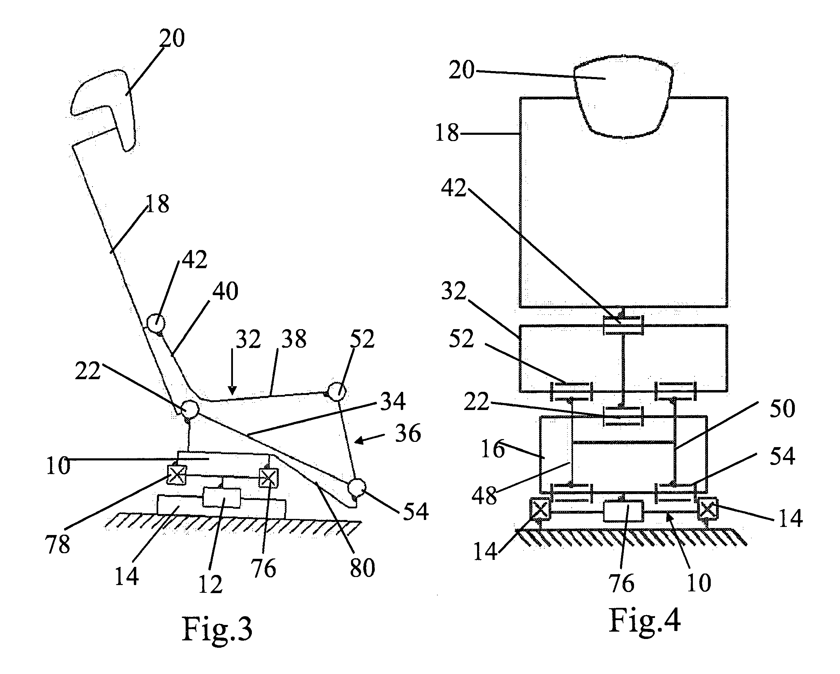

Les figures 3 et 4 représentent de façon schématique et respectivement de profil et de face les différentes articulations du siège repliable.

Sur la figure 3, les patins 12 fixés au bâti 10 peuvent glisser sur les rails 14 pour déplacer longitudinalement le siège. Le bâti 10 peut glisser sur les coulisseaux 76 et 78 pour un déplacement latéral. Le bas du dossier 18 est fixé en rotation au bâti du siège par l'axe horizontal 22. L'extrémité arrière de la bielle de liaison 34 est également fixée en rotation autour de l'axe 22 et son extrémité avant est fixée en rotation autour du coté horizontal inférieur 54 du support frontal 36 (ou autour de l'axe 67 au cas où cet axe et le coté 54 ne seraient pas confondus). L'armature d'assise 32 est articulée en rotation d'une part au dossier 18 par l'axe 42 et d'autre part à l'axe 52 (le coté horizontal supérieur du support frontal 36). La liaison 80 illustre la fixation amovible et en rotation du support frontal 36 à l'avant du bâti 10.

Les mêmes articulations sont représentées de face sur la figure 4. Le dossier 18 et l'armature d'assise 32 s'articulent autour de l'axe 42. L'armature d'assise 32 s'articule également autour de l'axe 52. Les cotés verticaux 48 et 50 du support frontal 36 sont reliées d'une part à l'axe 52 et d'autre part à l'axe 54. Le soubassement 16 du bâti 10 supporte l'axe 22 et l'axe 54 lorsque ce dernier est verrouillé au bâti. Les rails 14 et les coulisseaux 76 et 78 permettent le déplacement du siège respectivement longitudinalement et latéralement.

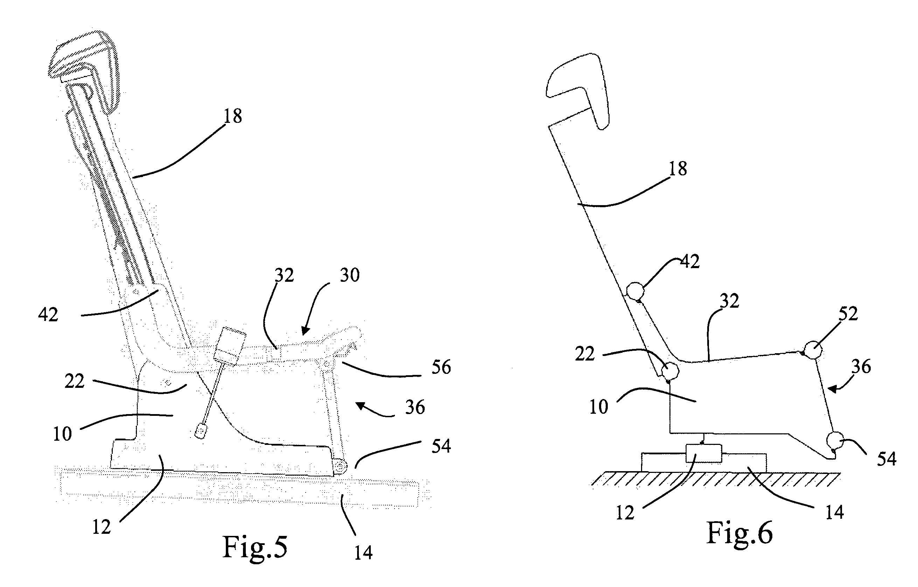

Les figures 5 et 6 concernent un deuxième mode de réalisation qui est simplifié par rapport au premier mode de réalisation décrit précédemment en regard des figures 1, 2, 3 et 4. Sur les figures 5 et 6, on retrouve les mêmes éléments principaux, à savoir le bâti 10 muni de patins 12 glissant longitudinalement sur les rails 14, le dossier 18 monté en rotation autour de l'axe horizontal 22 solidaire du bâti 10 et la structure d'assise 30 composée de l'armature d'assise 32 et du support frontal 36. Par rapport au premier mode de réalisation décrit, le deuxième mode ne comporte pas la bielle de liaison 34, les coulisseaux 76-78 permettant le déplacement latéral du siège et le mécanisme de verrouillage de la partie inférieure du support frontal 36 n'est pas débrayable. Le coté inférieur horizontal 54 du support d'assise 36 est monté pivotant autour et à l'avant du bâti 10, de façon non débrayable. Bien entendu, des coulisseaux transversaux pourraient équiper ce deuxième mode de réalisation si l'on souhaitait que le siège soit déplaçable latéralement.

Les figures 9 et 10, qui sont des vues en perspective, illustrent les deux manières différentes de replier le siège.

Sur ces figures, le siège est maintenu en position déployée par un mécanisme de verrouillage 86 (pas obligatoirement débrayable pour les figures 9 mais débrayable pour les figures 10), qui est différent de celui décrit en regard des figures 7 et 8 mais qui remplit la même fonction. Au lieu que les extrémités inférieures des cotés latéraux 48 et 50 se prolongent par des pieds 60 munis d'un logement dans lequel un élément 66 est emprisonné (figures 7 et 8), les extrémités 88 et 90 (bien visibles sur la figure 10D) du coté horizontal inférieur 54 sont emprisonnées dans deux cavités respectivement 92 et 94 solidaires du bâti. Deux crochets (non représentés) maintiennent les deux extrémités 88 et 90 dans les cavités 92 et 94. Ces crochets sont sollicités par un ressort de façon à maintenir les extrémités 88 et 90 emprisonnées dans les cavités 92 et 94. Lorsque le mécanisme 86 est débrayable, les crochets sont fixés en rotation autour d'un axe solidaire du bâti et une manette permet de commander la rotation des crochets de façon à libérer les extrémités 88 et 90 et donc à déverrouiller le mécanisme de verrouillage 86. Le siège peut alors passer en position repliée (appelée par la suite "deuxième" position) illustrée sur la figure 10D.

Les figures 9 illustrent la manière de replier le siège en une première position repliée, la structure d'assise s'affaissant vers l'avant et vers le plancher du véhicule, le dossier se repliant au-dessus du coussin de la structure d'assise. Cette position ne nécessite pas la présence de la bielle de liaison 34, ni une fixation amovible du support frontal 36 au bâti 10 (il suffit que cette fixation permette l'articulation du support au bâti). Cette première position peut donc être prise par les deux modes de réalisation du siège décrits précédemment. La figure 9A montre le siège en position déployée, le dossier 18 étant sensiblement vertical et l'armature d'assise 32 étant sensiblement horizontale. Un mécanisme non représenté permet de maintenir le siège dans cette position déployée. En débloquant ce mécanisme et en poussant le dossier 18 vers l'avant (figures 9B, 9C), le dossier s'incline vers l'avant en pivotant autour de l'axe 22. Le coté horizontal inférieur 54 du support frontal 36 reste immobile longitudinalement par rapport au bâti. Le coté horizontal supérieur 52 du support frontal 36 décrit un arc de cercle (vu de profil) centré autour du coté ou axe 54 en se déplaçant vers l'avant. L'armature 32 supportant un coussin d'assise se rapproche du plancher du véhicule. La position complètement repliée est atteinte (figure 9D) lorsque le dossier 18 est pratiquement horizontal, à proximité immédiate ou en appui sur le coussin d'assise. La structure d'assise 30 est complètement repliée, affaissée sur le plancher et sensiblement horizontale. L'encombrement du siège est ainsi très réduit.

On remarque que pour prendre cette première position repliée la bielle de liaison 34 et la possibilité de déverrouiller le mécanisme de verrouillage 86 ne sont pas nécessaires.

Les figures 10 illustrent la façon dont le mode de réalisation du siège décrit en regard des figures 1 à 4 peut être placé dans une autre position repliée, désignée par deuxième position. Sur la figure 10A, le siège est représenté habillé par un coussin de dossier 82 et par un coussin d'assise 84. La figure 10B montre le siège en position déployée, sans les coussins de dossier et d'assise. Le support frontal 36 est maintenu solidaire du bâti 10 par le mécanisme de verrouillage 86. En déverrouillant le mécanisme de verrouillage 86, qui est donc débrayable dans cette variante de réalisation, le siège passe automatiquement en position repliée, représentée sur la figure 10D, grâce à des moyens élastiques de rappel sollicitant la structure s'assise vers le haut. En position complètement repliée, la structure d'assise 30 est sensiblement verticale. La figure 10C montre une position intermédiaire, cette position étant instable puisque les moyens élastiques de rappel ramènent la structure d'assise en position complètement repliée. L'armature d'assise 30 pivote autour de l'axe 42, l'élément ou bielle de liaison 34 pivote autour de l'axe 22 et autour du coté horizontal inférieur 54 du support frontal 36 et le coté horizontal supérieur 54 pivote dans les logements 60 et 62.

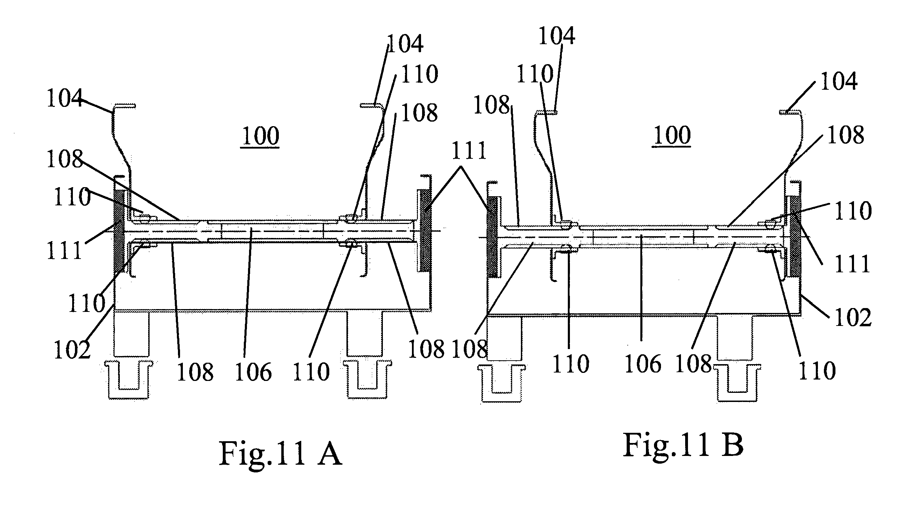

Les figures 11 A et 11 B représentent schématiquement en coupe verticale un mode de réalisation du siège repliable qui permet de déplacer latéralement le dossier 100 et la structure d'assise (non représentée) à l'intérieur du bâti 102 lorsque le siège est replié dans sa deuxième position (figure 10D). La structure d'assise est identique à la structure d'assise 30 décrite précédemment, à l'exception des modifications suivantes. L'armature supportant le coussin d'assise est montée en rotation autour d'un axe horizontal 106 sur lequel l'armature d'assise et le dossier 100 avec les flasques 104 peuvent coulisser latéralement. L'axe 106 comporte des rainures 108 parallèles et contenues dans un plan sensiblement vertical. Des clavettes 110 viennent se loger dans les rainures 108 lorsque le siège est en position repliée. L'élément ou bielle de liaison 34 est monté coulissant latéralement sur l'axe 22. Lorsque le siège est en deuxième position repliée (figure 10D), le dossier et la structure d'assise peuvent ainsi être déplacés latéralement.

Cette liaison coulissante permet de conserver le réglage d'articulation de dossier par l'accouplement permanent des modules 111 liés aux flasques 102 et flasques dossier 104

Sur les figures 11 A et 11 B le dossier et la structure d'assise sont en position complètement excentrée par rapport au bâti, respectivement à gauche et à droite. Cette possibilité de translation du dossier et de l'assise permet d'offrir plus d'espace au passager occupant un siége adjacent et ainsi d'améliorer son confort.

D'autres modes de réalisation que ceux décrits et représentés peuvent être conçus par l'homme du métier sans sortir du cadre de la présente invention.

## Revendications

1. Siège repliable pour voiture automobile comprenant un bâti (10) solidarisable en coulissement au plancher du véhicule, un dossier (18) monté en rotation autour d'un axe horizontal d'inclinaison (22) fixé au bâti et une structure d'assise (30) fixée en rotation au dossier (18), ladite structure d'assise (30) comportant:
- une armature d'assise (32) supportant un coussin d'assise et montée pivotante autour d'un axe horizontal (42) fixé au dossier, ledit axe étant fixé plus haut que ledit axe horizontal d'inclinaison (22),
- un support frontal (36) de ladite armature d'assise (32), articulé à la partie avant de l'armature d'assise (32), ledit support frontal (36) étant constitué principalement d'au moins un pied (48, 50) dont une extrémité est fixée en rotation à la partie avant de l'armature d'assise (32), le siège pouvant passer d'une position déployée pour laquelle le dossier est sensiblement vertical et le coussin d'assise est approximativement horizontal, à au moins une position repliée pour laquelle le dossier bascule vers l'avant pour devenir sensiblement horizontal et l'armature d'assise s'affaisse vers l'avant en restant sensiblement horizontal et en se rapprochant du plancher, le dossier venant se positionner au-dessus dudit coussin ;
- une bielle de liaison (34) ayant une extrémité frontale et une extrémité arrière, ladite extrémité frontale étant montée pivotante autour d'un axe horizontal (54) dudit support frontal (32), ladite bielle de liaison (34) permettant au siège de passer de ladite position déployée à une autre position repliée selon laquelle la structure d'assise (30) pivote vers le haut, la structure d'assise passant d'une position sensiblement horizontale à une position sensiblement verticale, ledit coussin d'assise venant à proximité immédiate du dossier,
- un mécanisme de verrouillage (60-66, 86) dudit support frontal (36) en position déployée du siège,
ledit siège étant **caractérisé en ce que** l'extrémité arrière de la bielle de liaison (34) est montée pivotante autour de l'axe horizontal d'inclinaison (22) du dossier (18) solidaire du bâti (10).

2. Siège repliable selon la revendication précédente , **caractérisé en ce que** l'extrémité inférieure (60) dudit pied (48, 50) comporte un logement (62) pouvant emprisonner de façon débrayable un élément (66) solidaire du bâti (10), et **en ce que** ledit élément (66) est rotatif, la rotation dudit élément lui permettant de s'échapper dudit logement lorsque ledit élément est dans une position déterminée, le logement (62) et l'élément (66) rotatif, solidaire du bâti (10), définissant le mécanisme de verrouillage (60-66, 86) du support frontal (36).

3. Siège repliable selon l'une quelconque des revendications précédentes, **caractérisé en ce que** ledit support frontal (36) comporte deux cotés latéraux (48, 50) constituant respectivement deux pieds reliés entre eux par un axe horizontal frontal (67, 54), ladite extrémité frontale de ladite bielle de liaison (34) étant montée pivotante autour dudit axe horizontal frontal (67, 54).

4. Siège repliable selon l'une des revendications précédentes, **caractérisé en ce que** le bâti (10) comporte des patins (12) à son extrémité inférieure, lesquels coulissent sur des rails longitudinaux (14) fixés au plancher.

5. Siège repliable selon l'une des revendications précédentes, **caractérisé en ce qu'**il comporte des moyens de déplacement latéraux (76, 78) permettant de déplacer latéralement au moins une partie du siège.

6. Siège repliable selon la revendication 5, **caractérisé en ce qu'**il comporte des rails transversaux (76, 78) sensiblement perpendiculaires à l'axe longitudinal du véhicule, le bâti se déplaçant latéralement sur les rails transversaux.

7. Siège repliable selon la revendication 5, **caractérisé en ce que** le dossier (100) et la structure d'assise sont montés coulissant latéralement à l'intérieur du bâti (102).

8. Siège repliable selon la revendication 7, **caractérisé en ce que** le dossier (100) est monté coulissant le long dudit axe horizontal d'inclinaison (106).

9. Siège repliable selon l'une quelconque des revendications précédentes, **caractérisé en ce qu'**il comporte des moyens élastiques de rappel amenant automatiquement ladite structure d'assise de la position déployée à ladite autre position repliée lorsque ledit mécanisme de verrouillage est débrayé.

## Patentansprüche

1. Klappsitz für ein Kraftfahrzeug, umfassend ein Gestell (10), das gleitend mit dem Boden des Fahrzeugs verbunden werden kann, eine Rückenlehne (18), die um eine waagrechte Neigungsachse (22) drehend montiert ist, die auf dem Gestell befestigt ist, und eine Sitzflächenstruktur (30), die drehend an der Rückenlehne (18) befestigt ist, und die besagte Sitzflächenstruktur (30) folgendes umfasst:
- ein Sitzflächentragwerk (32), das ein Sitzkissen trägt, und um eine waagrechte Achse (42) schwenkbar montiert ist, die an der Rückenlehne befestigt ist, wobei die besagte Achse höher befestigt ist, als die besagte waagrechte Neigungsachse (22),
- eine vordere Halterung (36) des besagten Sitzflächentragwerks (32), die gelenkig am vorderen Abschnitt des besagten Sitzflächentragwerks (32) befestigt ist, wobei die besagte vordere Halterung (36) in erster Linie aus zumindest einem Fuß (48, 50) besteht, von dem ein Ende drehend am vorderen Abschnitt des Sitzflächentragwerks (32) befestigt ist, und der Sitz von einer ausgefahrenen Stellung, in der die Rückenlehne in etwa senkrecht, und das Sitzkissen nahezu waagrecht stehen, in zumindest eine eingeklappte Stellung gebracht werden kann, für die die Rückenlehne nach vorne, in eine etwa waagrechte Stellung schwenkt, und sich das Sitzflächentragwerk nach vorne absenkt und in etwa waagrecht bleibt und sich dem Boden annähert, und sich die Rückenlehne über dem besagten Kissen positioniert;
- ein Verbindungsgestänge (34) mit einem vorderen Ende und einem hinteren Ende, wobei das besagte vordere Ende um eine waagrechte Achse (54) der besagten vorderen Halterung (32) schwenkend montiert ist, und der Sitz durch das besagte Verbindungsgestänge (34) von einer ausgefahrenen Stellung ein eine andere eingeklappte Stellung gebracht werden kann, in der die Sitzflächenstruktur (30) nach oben schwenkt, und die Sitzflächenstruktur von einer in etwa waagrecht liegenden Stellung in eine in etwa senkrechte Stellung übergeht, und das besagte Sitzkissen in die unmittelbare Nähe der Rückenlehne gelangt,
- einen Verriegelungsmechanismus (60-66, 86) der besagten vorderen Halterung (36) in der ausgefahrenen Stellung des Sitzes,
wobei der besagte Sitz **dadurch gekennzeichnet ist, dass** das hintere Ende des Verbindungsgestänges (34) um die waagrechte Neigungsachse (22) der Rückenlehne (18) schwenkend montiert ist, die fest mit dem Gestell (10) verbunden ist.

2. Klappsitz nach dem vorherigen Anspruch, **dadurch gekennzeichnet, dass** das untere Ende (60) des besagten Fußes (48, 50) eine Aufnahme (62) umfasst, die ein Element (66) auskoppelbar einschließen kann, das fest mit dem Gestell (10) verbunden ist, und dadurch, dass das besagte Element (66) drehend ist, und das besagte Element durch diese Drehung aus der besagten Aufnahme austreten kann, wenn sich das besagte Element in einer bestimmten Stellung befindet, wobei die Aufnahme (62) und das drehende Element (66), das fest mit dem Gestell (10) verbunden ist, den Verriegelungsmechanismus (60-66, 86) der vorderen Halterung (36) bilden.

3. Klappsitz nach irgendeinem der vorherigen Ansprüche, **dadurch gekennzeichnet, dass** die besagte vordere Halterung (36) zwei Seitenteile (48, 50) umfasst, die jeweils zwei Füße bilden, die durch eine vordere waagrechte Achse (67, 54) miteinander verbunden sind, und das besagte vordere Ende des besagten Verbindungsgestänges (34) um die besagte vordere waagrechte Achse (67, 54) schwenkend montiert ist.

4. Klappsitz nach einem der vorherigen Ansprüche, **dadurch gekennzeichnet, dass** das Gestell (10) an seinem unteren Ende Kufen (12) umfasst, die über Längsschienen (14) gleiten, die auf dem Boden befestigt sind.

5. Klappsitz nach einem der vorherigen Ansprüche, **dadurch gekennzeichnet, dass** er seitliche Verschiebevorrichtungen (76, 78) umfasst, mit denen zumindest ein Teil des Sitzes seitlich verschoben werden kann.

6. Klappsitz nach Anspruch 5, **dadurch gekennzeichnet, dass** er Querschienen (76, 78) umfasst, die in etwa senkrecht zur Längsachse des Fahrzeugs verlaufen, und sich das Gestell seitlich auf den Querschienen bewegt.

7. Klappsitz nach Anspruch 5, **dadurch gekennzeichnet, dass** die Rückenlehne (100) und die Sitzflächenstruktur seitlich gleitend im Inneren des Gestells (102) montiert sind.

8. Klappsitz nach Anspruch 7, **dadurch gekennzeichnet, dass** die Rückenlehne (100) entlang der besagten waagrechten Neigungsachse (106) gleitend montiert ist.

9. Klappsitz nach irgendeinem der vorherigen Ansprüche, **dadurch gekennzeichnet, dass** er elastische Rückholvorrichtungen umfasst, die die besagte Sitzflächenstruktur automatisch von der ausgefahrenen Stellung in die besagte andere eingeklappte Stellung bringen, sobald der besagte Verriegelungsmechanismus ausgekoppelt wird.

## Claims

1. Folding seat for a motor vehicle, comprising a frame (10) able to be slidably fixed to the floor of the vehicle, a backrest (18) mounted for rotation about a horizontal inclination axis (22) fixed to the frame and a squab structure (30) rotatably fixed to the backrest (18), said squab structure (30) comprising:
- a squab frame (32) supporting a squab cushion and mounted so as to pivot about a horizontal axis (42) fixed to the backrest, said axis being fixed higher than said horizontal inclination axis (22),
- a front support (36) for said squab frame (32), articulated on the front part of the squab frame (32), said front support (36) consisting mainly of at least one foot (48, 50) one end of which is fixed rotatably to the front part of the squab frame (32), the seat being able to pass from a deployed position in which the backrest is substantially vertical and the squab cushion is approximately horizontal, to at least one folded position in which the backrest tilts forward in order to become substantially horizontal and the squab frame sinks forward while remaining substantially horizontal and moving close to the floor, the backrest coming to be positioned above said cushion;
- a connecting link (34) having a front end and a rear end, said front end being mounted so as to pivot about a horizontal axis (54) on said front support bracket (32), said connecting link (34) enabling the seat to pass from said deployed position to another folded position in which the squab structure (30) pivots upwards, the squab structure passing from a substantially horizontal position to a substantially vertical position, said squab cushion coming into the immediate vicinity of the backrest,
- a mechanism (60-66, 86) for locking said front support (36) in the deployed position of the seat,
said seat being **characterised in that** the rear end of the connecting link (34) is mounted so as to pivot about the horizontal inclination axis (22) of the backrest (18) fixed to the frame (10).

2. Folding seat according to the preceding claim, **characterised in that** the bottom end (60) of said foot (48, 50) comprises a housing (62) able to disengageably trap an element (66) fixed to the frame (10), and **in that** said element (66) is rotary, the rotation of said element enabling it to escape from said housing when said element is in a given position, the housing (62) and the rotary element (66), fixed to the frame (10), defining the mechanism (60-66, 86) for locking the front support (36).

3. Folding seat according to any one of the preceding claims, **characterised in that** said front support (36) comprises two lateral sides (48, 50) constituting respectively two feet connected together by a front horizontal axis (67, 54), said front end of said connecting link (34) being mounted so as to pivot about said front horizontal axis (67, 54).

4. Folding seat according to one of the preceding claims, **characterised in that** the frame (10) comprises runners (12) at its bottom end, which slide on longitudinal rails (14) fixed to the floor.

5. Folding seat according to one of the preceding claims, **characterised in that** it comprises lateral movement means (76, 78) enabling at least part of the seat to be moved laterally.

6. Folding seat according to claim 5, **characterised in that** it comprises transverse rails (76, 78) substantially perpendicular to the longitudinal axis of the vehicle, the frame moving laterally on the transverse rails.

7. Folding seat according to claim 5, **characterised in that** the backrest (100) and the squab structure are mounted so as to slide laterally in the frame (102).

8. Folding seat according to claim 7, **characterised in that** the backrest (100) is mounted so as to slide along said horizontal inclination axis (106).

9. Folding seat according to any one of the preceding claims, **characterised in that** it comprises elastic return means automatically bringing said squab structure from the deployed position to said other folded position when said locking mechanism is disengaged.
